# EUROPEAN PATENT SPECIFICATION

(11) **EP 0 382 224 B1**
(45) Date of publication and mention of the grant of the patent: **17.04.1996**
(21) Application number: 90102509.8
(22) Date of filing: 08.02.1990
(51) Int. Cl.: C08G 65/32, C10M 145/00

(54) **Perfluoropolyethers having antirust properties**
Perfluorpolyether mit Antirosteigenschaften
Perfluoropolyéthers ayant des propriétés antirouilles

(30) Priority: 09.02.1989 IT 1937289
(43) Date of publication of application: 16.08.1990
(73) Proprietor: AUSIMONT S.p.A., I-20100 Milano (IT)
(72) Inventor: Strepparola, Ezio, Dr., I-24047 Treviglio, Bergamo (IT); Corti, Costante, Dr., I-20141 Milan (IT); Gavezotti, Piero, Dr., I-20148 Milan (IT); Chittofrati, Alba, Dr., I-20133 Milan (IT)
(74) Representative: Barz, Peter, Dr.

(56) References cited:
- EP-A- 0 259 980
- EP-A- 0 337 312
- DE-A- 1 817 826
- DE-A- 2 632 837
- GB-A- 1 244 189

## Description

The present invention relates to functionalized perfluoropolyethers having antirust properties and the use thereof for the prevention of corrosion.

It is known that the use of perfluoropolyethers as lubricants cannot prevent, in the presence of moisture, the formation of rust on the surface of iron materials,even if the latter are coated with an oil film.

This is to be attributed to the high permeability of perfluoropolyethers (PFPE) to gases, to vapors and, among these, also to steam.

PFPE utilizable for formulating lubricating oils and greases are widely known on the market, e.g. under the tradenames FOMBLIN® (Montedison), KRYTOX® (Du Pont), DEMNUM® (Daikin), etc.

Said PFPE are in particular perfluoropolyethers of the "neutral" type, i.e. having perfluoroalkyl end groups, which are liquids having a very low vapor tension and a viscosity generally ranging from 10 to 4000 mm/s (cSt)at 20°C.

Examples of said PFPE are the following classes of compounds:
1. 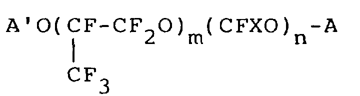 wherein X is F or CF₃; A and A', the same or different from each other, can be CF₃, C₂F₅ and C₃F₇, the units (CF(CF₃)CF₂O) and CFXO are statistically distributed along the perfluoropolyether chain and m and n are integers such that the viscosity of the resulting PFPE ranges from 10 to 4000 mm/s (cSt).
   These perfluoropolyethers may be prepared by photooxidation of hexafluoropropene (e.g. according to the process described in GB-A-1,104,482)and by subsequent conversion of the end groups into inert groups (e.g. according to the process described in GB-A-1,226,566).
2. 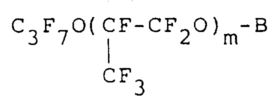 wherein B can be C₂F₅ and C₃F₇ and m is an integer having a value such that the product viscosity is in the above range. These compounds may be prepared by ionic oligomerization of hexafluoropropene epoxide and subsequent treatment of the resulting acyl fluoride (COF) with fluorine according to the processes illustrated in, e.g., US-A-2,242,218.
3. 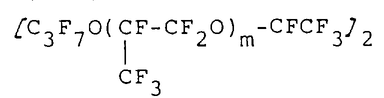 wherein m is an integer such that the product viscosity is in the above range.
   These products may be prepared by ionic telomerization of hexafluoropropene epoxide and subsequent photochemical dimerization of the resulting acyl fluoride, according to the processes described in, e.g., US-A-3,214,478.
4.

   A′O[CF(CF₃)CF₂O]ₘ (C₂F₄O)ₙ(CFXO)_{q}A

   wherein A and A′, the same or different from each other, can be CF₃, C₂F₅ and C₃F₇; X is F or CF₃; m, n and q are integers and can also be 0, but in any case have values such that the viscosity is in the above range.
   These products may be obtained by photooxidation of mixtures of C₃F₆ and C₂F₄ and subsequent treatment with fluorine according to the process described in, e.g., US-A-3,665,041.
5.

   CF₃O(C₂F₄O)ₚ (CF₂O)_{q} CF₃

   wherein p and q are integers, the same or different from each other, and the ratio p/q ranges from 0.5 to 2 and is such that the viscosity is in the above range. These perfluoropolyethers may be prepared by photochemical oxidation of C₂F₄ according to US-A-3,715,378 and subsequent treatment of the resulting product with fluorine according to, e.g., US-A-3,665,041.
6.

   AO-(CF₂-CF₂-CF₂O)ₘ-A'

   wherein A and A', the same or different from each other, can be CF₃, C₂F₅ and C₃F₇ and m is an integer such that the viscosity of the product is in the above range. These products may be prepared according to, e.g., the procedure described in EP-A-148,482.
7.

   DO-(CF₂-CF₂O)ᵣD'

   wherein D and D', the same or different from each other, can be or or C₂F₅ and r is an integer such that the viscosity of the products is in the above range. These products may be obtained according to, e.g., US-A-4,523,039.
8. 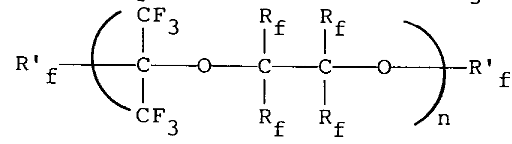 wherein R'_{f} is a perfluoroalkyl group, n is at least 8 and R_{f} is F or a perfluoroalkyl group. These perfluoropolyethers are described in PCT patent application WO 87/00538.

It is known that it is extremely difficult to add other compounds to perfluoropolyethers since a characteristic of the latter is their absolute immiscibility with most of the chemical compounds. Therefore it is impossible to use,as additives therefor, those products which usually are utilized for mineral oils (which commonly are used as lubricants and to which other compounds may easily be added under formation of mixtures showing sufficient stability over time).

The compounds used according to the present invention exhibit a considerable improvement as regards antirust protection as compared to the products having an anti-corrosive action disclosed in EP-A-95,825; 165,649 and 165,650 and in Italian patent No. 1189469.

In particular, the additives described in Italian patent No. 1189469 which so far have exhibited the best antirust properties are the following: 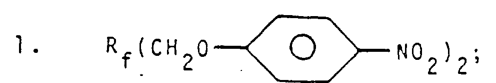 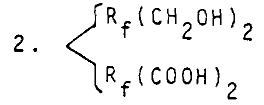 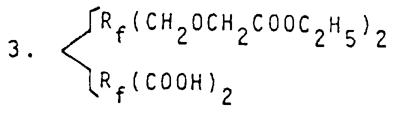 wherein R_{f} =-CF₂R′_{f}CF₂-, R′_{f} being a perfluoropolyether chain having an average molecular weight of about 2,000.

However, the above additives 1 and 3 show the drawback that they are scarcely soluble in the lubricating perfluoropolyether, giving rise to problems such as phase separation, while additive 2, in spite of being endowed, at the beginning, with an acceptable solubility, in the course of time results in the formation of a certain amount of the corresponding ester which renders the mass turbid and tends to form a supernatant layer, wherefore the additive eventually separates from the lubricant.

Other products of the class of perfluoropolyethers having, as end groups, nitrile, amine and nitrogen-containing heterocyclic groups, optionally combined with small amounts of perfluoropolyether acids, have also been proposed. Such antirust additives exhibit a rather good solubility in perfluoropolyether oils (see EP-A-337425).

It has now surprisingly been found that certain perfluoropolyethers, prepared by photochemical oxidation of perfluoropropene, optionally in admixture with C₂F₄ and optionally in the presence of chlorofluoroolefins, successive heat treatment of the resulting peroxy compounds in order to remove the peroxo groups present therein, and subsequent hydrolysis in order to convert the -COF groups into -COOH groups, can advantageously be employed,without any further treatment for the conversion of the ketone end groups, both as additives for perfluoropolyether lubricating oils and as components of lubricating greases and as lubricating oils per se, due to their antirust properties.

In fact, it has surprisingly been observed that the presence of ketone end groups results in improved antirust properties as compared with perfluoropolyethers having the same structure and in which said ketone groups have been converted, by treatment with alkali, into carboxy or -CF₂H groups.

The product used according to the present invention for the prevention of corrosion comprises a mixture of macromolecules having a perfluoropolyether chain of the following structure: 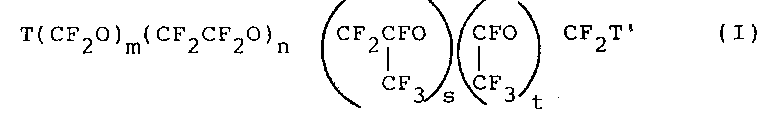 wherein the perfluorooxyalkylene units with indexes m, n, s and t are statistically distributed along the macromolecular chain, the average values of m, n, s and t are such as to result in an average molecular weight of from 2500 to 20000, index n being 0 when only C₃F₆ is used as the starting fluorinated olefin, the end groups T and T', the same or different from each other, are selected from CF₂XO-, C₂F₄XO-, C₃F₆XO-, -COOH and/or -CONR₁R₂ and/or -COO⁻HA⁺ (carboxy group salified with an amine R₁R₂HN), 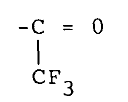 and its hydrated derivative of formula 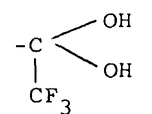 wherein X is F or C1, R₁ and R₂, the same or different from each other, preferably are H or (preferably C₁₋₈) alkyl, (preferably C₄₋₈) cycloalkyl, (preferably C₇₋₁₅) alkylaryl or (preferably C₆₋₁₄) aryl radicals, optionally containing substituents such as, e.g., -OH and halogens (e.g. Cl, Br and F) or N belongs to a heterocyclic radical which may also contain other (preferably one or two other) heteroatoms such as O, S and P. Each macromolecule generally has at least one functional end group and, preferably, has only one functional end group.

In the perfluoropolyether product used according to the present invention the amide group -CONR₁R₂ and the salified carboxy group -COO⁻HA⁺ may be present instead of or in addition to the free carboxy group -COOH. The carboxy group can partially or completely be converted into the corresponding amide group or it can partially or completely be salified with an amine. Perfluoropolyethers wherein the carboxy group is partially or completely salified with a primary, secondary and/or tertiary amine and/or an N-heterocyclic base or is partially or completely converted into an amide group of formula -CONR₁R₂ wherein R₁ and R₂ are as defined above represent new products and are another object of the present invention.

The macromolecule mixture used as an anticorrosion (antirust) agent according to the present invention is furthermore characterized by a content of ketone groups 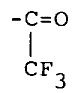 and/or hydrates thereof,

and of carboxy groups -COOH and/or their amide equivalents -CONR₁R₂ or salified carboxy equivalents -COO⁻HA⁺, in defined ratios ranging from 0.5 to 5, expressed as -CO(·H₂O)/-COZ, wherein -COZ is the sum of -COOH, -CONR₁R₂ and -COO⁻HA⁺.

The number of end groups -COZ is such that the average value of the milliequivalents of -COZ per gram of product ranges from 0.005 to 0.25 and preferably is at least 0.05.

The perfluoropolyethers having antirust properties used according to the present invention can be used as additives for the "neutral" perfluoropolyethers (PFPE), i.e. perfluoropolyethers having perfluoroalkyl end groups of the above classes 1-8, generally in amounts of at least 3% by weight, and preferably at least 5% by weight.

In consideration of their complete miscibility with neutral PFPE and the fact that they can be used as lubricants per se, the perfluoropolyethers according to the invention can be used, of course, also in amounts of up to 100%.

The perfluoropolyethers having antirust properties employed according to the invention can be used in admixture with neutral PFPE, in the preparation of lubricating greases having antirust properties. Corresponding lubricating greases are also an object of the present invention.

In particular, said lubricating greases may be prepared in the form of a suspension of powdered polytetrafluoroethylene in liquid perfluoropolyether, according to the disclosure of EP-A-95825.

The perfluoropolyethers having the general formula (I) may be prepared by means of the processes disclosed in, e.g., US-A-3,665,041; 3,683,027 and 3,847,978 and GB-A-1,244,189, optionally operating in the presence of chlorofluoroolefin according to EP-A-340739.

The carboxy and amide end groups can be introduced according to the methods described in the above patents and patent applications or in US-A-3,810,874.

The salification of the free carboxy groups or their conversion into amide groups by means of amines can be partial or complete. It also is possible to use an excess of amine with respect to the stoichiometric amount (e.g. up to 2.5 moles of amine per each -COOH group).

In particular, the following amines are suitable: morpholine, triethanolamine, isobutylamine and N-aminoethylethanolamine.

The antirust properties of the lubricants according to the present invention have been evaluated by the following tests.

### Antirust test in fog chamber (modified ASTM B 117)

### -Object

Determination of the antirust properties of oils on metals under high humidity conditions.

### - Summary of the method

Small plates of carbon steel (C15)(UNI) - superficially treated as described hereinafter - are immersed in the oil, allowed to drip and hung in a fog chamber (35°C, 100% of relative humidity) for a predetermined number of hours. The oil passes or does not pass the test depending on the rust stains which are visible on the surface of the plates.

### - Apparatus

The fog chamber consists of a sprayer operating by means of compressed air (pressure = 0.26 MPa (2.5 atm.)), connected with a water tank and capable of saturating the environment with moisture; the temperature control is adjusted at 35°C.

### - Test conditions

The tests reported herein were carried out as follows, using partially demineralized water (pH = 5.5-7.5):
1. the plates were hung and allowed to drip for 16 hours;
2. they were then introduced into the fog chamber, which was maintained in operation for the predetermined duration of the test (16 hours; 32 hours; 96 hours).

The evaluation was then carried out.

### - Preparation of the steel plates

The steel plates (50x100x3 mm) were cleaned and degreased by means of a pad which was first imbued with n-hexane and then with Delifrene ® 113 (trichlorotrifluoroethane).

(Note: polyethylene gloves were used for handling the plates.)

### - Evaluation of the results (in analogy to the method of DIN 51802 (EMCOR) for bearings).

The results of the tests were expressed according to the following rating:
(0) - no traces of rust observed;
(1) - very few corrosion spots having a diameter below 1 mm;
(2) - 30% of the surface covered with small spots having a diameter below 2 mm;
(3) - 60% of the surface covered with small spots having a diameter below 3 mm;
(4) - 100% of the surface covered with large spots having a diameter of 4-5 mm, the bright surface being visible in a few places;
(5) - 100% of the surface covered with large stains; the underlying surface is not visible.

The evaluation does not consider the rust stains appearing in the area up to 0.5 mm from the edges.

When the rating is (0), the result is considered to be optimum; also rating (1) is acceptable.

In the evaluation, two numbers are indicated: the first one relates to the state of the exposed surface, the second one to the state of the non-exposed surface (with respect to the sprayer).

The following examples are given for illustrative purposes only.

### EXAMPLE 1

By means of the accelerated corrosion test in the fog chamber, according to the method described above, and for 16 hours, the antirust properties of a perfluoropolyether covered by formula (I) were evaluated. In said PFPE n was 0 and it had an average molecular weight of about 2600, acid end groups -COOH in an amount corresponding to an average acid equivalent weight of 9800 (corresponding to about 0.1 milliequivalents of -COOH/ g) and a ratio CO/-COZ of 2.8. The product was tested both as such and in admixture with a perfluoropolyether having perfluoroalkyl end groups of class (1), having a viscosity of about 250 mm/s (cSt) at 20°C and an average molecular weight of 3200 (Fomblin Y 25 ® produced by Montedison).

Table 1 shows the results obtained both with the antirust product as such (100%) and by using it as additive for the neutral PFPE. The table also shows the concentration of end groups -COOH in the mixture with neutral PFPE.

**TABLE 1**

| Acid PFPE % by weight | m.eq. of COOH/g | Antirust index |
|---|---|---|
| a) 100 | about 0.1 | 0-0 |
| b) 1 | about 0.001 | 3-2 |
| c) 3 | about 0.003 | 2-1 |
| d) 5 | about 0.005 | 1-0 |

### Example 1A (comparative test)

A perfluoropolyether having acid end groups, like the one employed in the preceding example 1, was subjected to saponification with KOH in order to remove a part of the ketone end groups

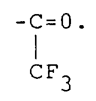

Accordingly, the resulting perfluoropolyether corresponded to the one of example 1 as regards the acid equivalent weight, with the difference that it exhibited a ratio CO/COZ of about 0.1.

When used as additive for the neutral oil Fomblin® of example 1, the above PFPE yielded, in the corrosion test under the same conditions as in example 1, much worse results than the ones obtained with the functionalized perfluoropolyether according to the invention, having a CO/COZ ratio of 2.8, as can be taken from the data reported in the following Table 2 in comparison with the ones of tests b), c), d) of Table 1.

**TABLE 2**

| Acid PFPE | m.eq. of COOH/g | Antirust index |
|---|---|---|
| 1) 1% b.w. | 0.001 | 4-3 |
| 2) 3% b.w. | 0.003 | 3-2 |
| 3) 5% b.w. | 0.005 | 2-2 |

### Example 1B

Test a) of example 1 was repeated for a 96-hour period. The result of the test was again 0-0.

### Example 1C (comparative test)

Example 1 was repeated using, as lubricant, perfluoropolyether Fomblin® Y 25 as such, without additive.

The result was a complete corrosion of the plate; rating: 5-5.

### EXAMPLE 2

A sample of perfluoropolyether belonging to formula (I), (wherein n is 0) and having an average molecular weight of about 3300 and acid groups salified with morpholine or isobutylamine was subjected to the accelerated corrosion test described above (16 h). The average acid equivalent weight was 5000, corresponding to 0.2 m.eq. of COZ/g. The CO/COZ ratio was 0.5.

Mixtures of said perfluoropolyether with the PFPE having perfluoroalkyl end groups of example 1 (Fomblin® Y 25) were also tested.

The results are reported in the following Table 3, wherein also the amount of amine employed in the salification is indicated.

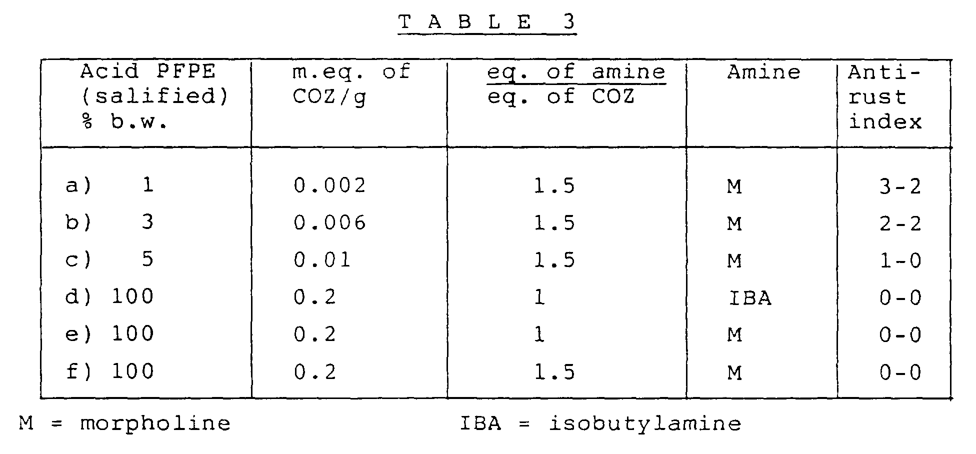

### Example 2A

Tests d), e), f) of example 2 were repeated for a 32-hour period.

The results of the tests were 2-0, 1-0 and 1-0, respectively.

### Example 3

Samples of a perfluoropolyether having perfluoroalkyl end groups (Fomblin® Y 25) mixed with a perfluoropolyether belonging to formula (I) (wherein n is 0) and having an average molecular weight of about 2500 and carboxy end groups salified with triethanolamine (average acid equivalent weight 9000,corresponding to a content of 0.11 m.eq./g of end groups -COZ, CO/COZ ratio equal to 2.6) were examined by means of the accelerated corrosion test described above (16 h).

The results are reported in Table 4.

**TABLE 4**

| Acid PFPE (salified) % b.w. | m.eq. of COZ/g | $\frac{\text{eq. of amine}}{\text{eq. of COZ}}$ | Antirust index |
|---|---|---|---|
| a) 2.75 | 0.003 | 2.5 | 2-0 |
| b) 5.5 | 0.006 | 2.5 | 1-0 |
| c) 10 | 0.011 | 2.5 | 1-0 |

### Example 3A

Tests b), c) of example 3 were repeated for a 96-hour period. The results of the tests were 1-0 and 1-0,respectively.

### EXAMPLE 4

Samples of a PFPE having perfluoroalkyl end groups (Fomblin® Y 25) mixed with a perfluoropolyether belonging to formula (I) (wherein n is 0) and having an average molecular weight of about 2500 and acid end groups converted into amide groups derived from N-(2-aminoethyl)ethanolamine (average acid equivalent weight of the starting PFPE 9000,corresponding to 0.11 m.eq. of COZ/g, CO/COZ ratio equal to 2.6) were evaluated by means of the accelerated corrosion test described above (16 h).

The results are reported in Table 5, wherein also the employed amount of amine is indicated.

**TABLE 5**

| Acid PFPE (amide) % b.w. | m.eq. of COZ/g | $\frac{\text{eq. of amine}}{\text{eq. of COZ}}$ | Antirust index |
|---|---|---|---|
| a) 3 | 0.003 | 2.4 | 1-0 |
| b) 5.4 | 0.006 | 2.5 | 1-0 |
| c) 10.6 | 0.012 | 2.5 | 0-0 |

### Example 4A

Tests b), c) of example 4 were repeated for a 32-hour period. The results of the tests were 2-0 and 0-0, respectively.

## Claims

1. Use of perfluoropolyethers obtainable by photochemical oxidation of CF₂=CFCF₃ or mixtures of CF₂=CFCF₃ and CF₂=CF₂, optionally in the presence of chlorofluoroolefins, removal of the resulting peroxide groups by heat treatment and subsequent hydrolysis in order to convert the -COF groups into -COOH groups and consisting of a macromolecule mixture represented by general formula I: 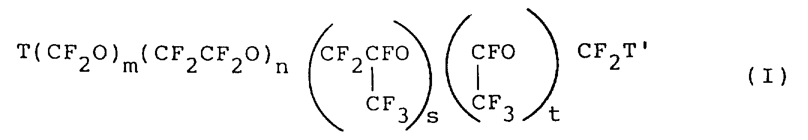 wherein the perfluorooxyalkylene units are statistically distributed along the macromolecular chain, the average values of m, n, s and t are such as to result in an average molecular weight of from 2500 to 20000, n being 0 when only C₃F₆ is used as the starting fluorinated olefin, the end groups T and T', the same or different from each other, are selected from CF₂XO-, C₂F₄XO-, C₃F₆XO-, -COOH, optionally salified with an amine or converted into an amide group, 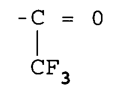 and its hydrated derivative of formula 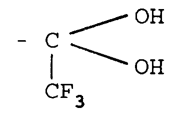 wherein X is F or Cl, and wherein the ratio of the number of ketone groups of formula 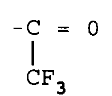 and/or hydrates thereof to the number of carboxy groups -COOH and salified and amide derivatives thereof in the macromolecule mixture ranges from 0.5 to 5 and the milliequivalents of end groups -COOH and salified or amide derivatives thereof per gram of product ranges from 0.005 to 0.25;
for the prevention of corrosion.

2. Perfluoropolyethers having antirust properties, suitable for being employed as lubricating oils per se or as antirust additives for perfluoropolyether lubricating oils, obtainable by photochemical oxidation of CF₂=CFCF₃ or mixtures of CF₂=CFCF₃ and CF₂=CF₂, optionally in the presence of chlorofluoroolefins, removal of the resulting peroxide groups by heat treatment and subsequent hydrolysis in order to convert the -COF groups into -COOH groups and consisting of a macromolecule mixture represented by general formula I: 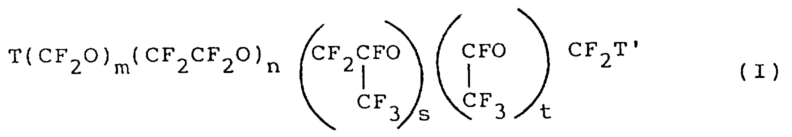 wherein the perfluorooxyalkylene units are statistically distributed along the macromolecular chain, the average values of m, n, s and t are such as to result in an average molecular weight of from 2500 to 20000, n being 0 when only C₃F₆ is used as the starting fluorinated olefin, the end groups T and T', the same or different from each other, are selected from CF₂XO-, C₂F₄XO-, C₃F₆XO-, -COOH, partially or completely salified with a primary, secondary and/or tertiary amine and/or an N-heterocyclic base or partially or completely converted into an amide group of formula -CONR₁R₂ wherein R₁ and R₂ are H, alkyl, cycloalkyl, alkylaryl or aryl radicals, optionally substituted, or N belongs to a heterocyclic ring, 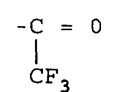 and its hydrated derivative of formula 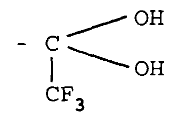 wherein X is F or Cl, and wherein the ratio of the number of ketone groups of formula 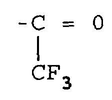 and/or hydrates thereof to the total number of carboxy groups -COOH and salified and amide derivatives thereof in the macromolecule mixture ranges from 0.5 to 5 and the milliequivalents of end groups -COOH and salified or amide derivatives thereof per gram of product ranges from 0.005 to 0.25.

3. Perfluoropolyethers according to claim 2, wherein said N-heterocyclic base also contains other heteroatoms besides N.

4. Perfluoropolyethers according to claim 3, wherein said other heteroatoms are selected from O, S and P.

5. Perfluoropolyethers according to claim 2, wherein said optionally substituted alkyl, cycloalkyl, alkylaryl or aryl radicals contain substituents selected from -OH and halogens.

6. Perfluoropolyethers according to claim 2, wherein said heterocyclic ring to which N in formula -CONR₁R₂ may belong also contains other heteroatoms.

7. Perfluoropolyethers according to claim 6, wherein said other heteroatoms are selected from O, S and P.

8. Lubricating oils comprising perfluoropolyethers having perfluoroalkyl end groups and perfluoropolyethers as defined in any one of claims 1 to 7.

## Patentansprüche

1. Verwendung von Perfluorpolyethern, die erhältlich sind durch photochemische Oxidation von CF₂=CFCF₃ oder Mischungen von CF₂=CFCF₃ und CF₂=CF₂, gegebenenfalls in Anwesenheit von Chlorfluorolefinen, Entfernung der resultierenden Peroxidgruppen durch Wärmebehandlung und anschließende Hydrolyse, um die Gruppe -COF in Gruppen -COOH umzuwandeln, und bestehend aus einer Makromolekül-Mischung, die durch die allgemeine Formel I dargestellt wird: 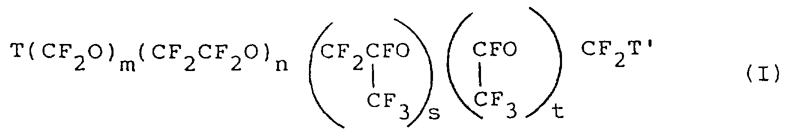 worin die Perfluoroxyalkylen-Einheiten statistisch entlang der Makromolekül-Kette verteilt sind, die Durchschnittswerte von m, n, s und t derart sind, daß sie in einem durchschnittlichen Molekulargewicht von 2500 bis 20000 resultieren, wobei n 0 ist, wenn nur C₃F₆ als fluoriertes Ausgangs-Olefin eingesetzt wird, die Endgruppen T und T', die gleich oder verschieden voneinander sind, ausgewählt sind aus CF₂XO-, C₂F₄XO-, C₃F₆XO-, -COOH, gegebenenfalls mit einem Amin ins Salz überführt oder in eine Amidgruppe überführt, 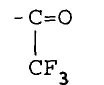 und dessen hydratisiertem Derivat der Formel 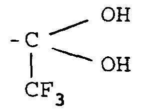 worin X für F oder Cl steht, und worin das Verhältnis der Zahl der Ketongruppen der Formel 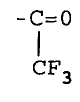 und/oder Hydraten davon zur Zahl der Carboxygruppen -COOH und ins Salz überführten und Amid-Derivaten davon in der Makromolekül-Mischung im Bereich von 0,5 bis 5 liegt und die Milliäquivalente an Endgruppen -COOH und ins Salz überführten oder Amid-Derivaten davon pro Gramm Produkt im Bereich von 0,005 bis 0,25 liegt;
für die Verhinderung von Korrosion.

2. Perfluorpolyether mit Antirost-Eigenschaften, geeignet für den Einsatz als Schmieröle per se oder als Antirost-Additive für Perfluorpolyether-Schmieröle, erhältlich durch photochemische Oxidation von CF₂=CFCF₃ oder Mischungen von CF₂=CFCF₃ und CF₂=CF₂, gegebenenfalls in Anwesenheit von Chlorfluorolefinen, Entfernung der resultierenden Peroxidgruppen durch Wärmebehandlung und anschließende Hydrolyse, um die Gruppen -COF in Gruppen -COOH zu überführen, und bestehend aus einer Makromolekül-Mischung, die durch die allgemeine Formel (I) dargestellt wird: 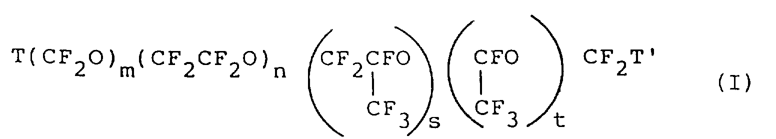 worin die Perfluoroxyalkylen-Einheiten statistisch entlang der Makromolekül-Kette verteilt sind, die Durchschnittswerte von m, n, s und t derart sind, daß sie in einem durchschnittlichen Molekulargewicht von 2500 bis 20000 resultieren, wobei n 0 ist, wenn nur C₃F₆ als fluoriertes Ausgangs-Olefin eingesetzt wird, die Endgruppen T und T', die gleich oder verschieden voneinander sind, ausgewählt sind aus CF₂XO-, C₂F₄XO-, C₃F₆XO-, -COOH, teilweise oder vollständig mit einem primären, sekundären und/oder tertiären Amin und/oder einer N-heterocyclischen Base ins Salz überführt oder teilweise oder vollständig in einem Amidgruppe der Formel -CONR₁R₂ überführt, worin R₁ und R₂ für H, Alkyl-, Cycloalkyl-, Alkylaryl- oder Aryl-Reste, gegebenenfalls substituiert, stehen oder N zu einem heterocyclischen Ring gehört, 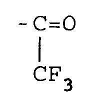 und dessen hydratisiertem Derivat der Formel 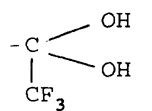 worin X für F oder Cl steht, und worin das Verhältnis der Zahl der Ketongruppen der Formel 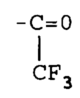 und/oder Hydraten davon zur Zahl der Carboxygruppen -COOH und ins Salz überführten und Amid-Derivaten davon in der Makromolekül-Mischung im Bereich von 0,5 bis 5 liegt und die Milliäquivalente an Endgruppen -COOH und ins Salz überführten oder Amid-Derivaten davon pro Gramm Produkt im Bereich von 0,005 bis 0,25 liegt.

3. Perfluorpolyether nach Anspruch 2, in welchen die N-heterocyclische Base neben N auch andere Heteroatome enthält.

4. Perfluorpolyether nach Anspruch 3, in welchen die anderen Heteroatome aus O, S und P ausgewählt sind.

5. Perfluorpolyether nach Anspruch 2, in welchen die gegebenenfalls substituierten Alkyl-, Cycloalkyl-, Alkylaryl- oder Aryl-Reste Substituenten enthalten, die aus -OH und Halogenen ausgewählt sind.

6. Perfluorpolyether nach Anspruch 2, in welchen der heterocyclische Ring, zu dem N in Formel -CONR₁R₂ gehören kann, auch andere Heteroatome enthält.

7. Perfluorpolyether nach Anspruch 6, in welchen die anderen Heteroatome aus O, S und P ausgewählt sind.

8. Schmieröle, umfassend Perfluorpolyether mit Perfluoralkyl-Endgruppen und Perfluorpolyether wie in irgendeinem der Ansprüche 1 bis 7 definiert.

## Revendications

1. Utilisation de perfluoropolyéthers pouvant être obtenus par oxydation photochimique de CF₂=CFCF₃ ou de mélanges de CF₂=CFCF₃ et de CF₂=CF₂, facultativement en présence de chlorofluorooléfines, élimination des groupes peroxyde résultants par traitement thermique, et hydrolyse subséquente de façon à convertir les groupes -COF en groupes -COOH et consistant en un mélange de macromolécules représenté par la formule générale (I) : 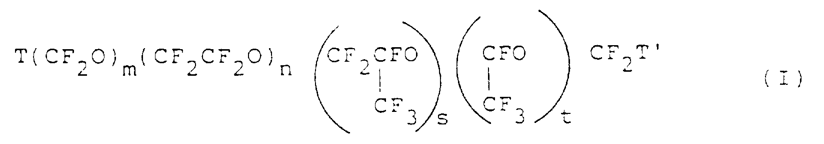 dans laquelle :
- les unités perfluorooxyalkylène sont distribuées de façon statistique le long de la chaîne macromoléculaire ;
- les valeurs moyennes de m, n, s et t sont telles qu'elles conduisent à une masse moléculaire moyenne de 2500 à 20 000, n valant 0 lorsque seul C₃F₆ est utilisé comme oléfine fluorée de départ ;
- les groupes terminaux T et T', identiques ou différents l'un de l'autre, sont choisis parmi CF₂XO-, C₂F₄XO-, C₃F₆XO-, -COOH, facultativement salifié par une amine ou converti en un groupe amide, 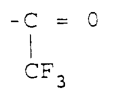 et son dérivé hydraté de formule : 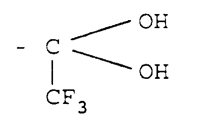 où X représente F ou Cl, et où le rapport du nombre de groupes cétone de formule 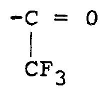 et/ou de leurs hydrates au nombre de groupes carboxy -COOH et de leurs dérivés salifiés et amides dans le mélange de macromolécules se situe dans la plage de 0,5 à 5, et les milliéquivalents de groupes terminaux -COOH et de leurs dérivés salifiés ou amides par gramme de produit se situent dans la plage de 0,05 à 0,25 ;
pour la prévention de la corrosion.

2. Perfluoropolyéthers ayant des propriétés anti-rouille, appropriés pour être employés comme huiles lubrifiantes en tant que telles ou en tant qu'additifs anti-rouille pour des huiles lubrifiantes perfluoropolyéthers, pouvant être obtenus par oxydation photochimique de CF₂=CFCF₃ ou de mélanges de CF₂=CFCF₃ et de CF₂ =CF₂, facultativement en présence de chlorofluorooléfines, élimination des groupes peroxyde résultants par traitement thermique, et hydrolyse subséquente de façon à convertir les groupes -COF en groupes -COOH et consistant en un mélange de macromolécules représenté par la formule générale (I) : 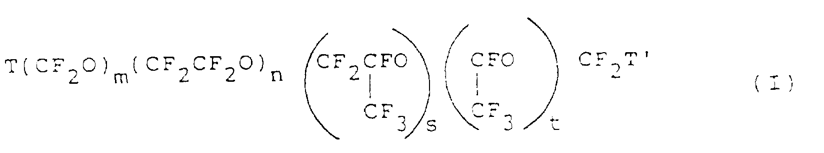 dans laquelle :
- les unités perfluorooxyalkylène sont distribuées de façon statistique le long de la chaîne macromoléculaire ;
- les valeurs moyennes de m, n, s et t sont telles qu'elles conduisent à une masse moléculaire moyenne de 2500 à 20 000, n valant 0 lorsque seul C₃F₆ est utilisé comme oléfine fluorée de départ ;
- les groupes terminaux T et T', identiques ou différents l'un de l'autre, sont choisis parmi CF₂XO-, C₂F₄XO-, C₃F₆XO-, -COOH, partiellement ou complètement salifié par une amine primaire, secondaire et/ou tertiaire, et/ou une base N-hétérocyclique, ou partiellement ou complètement converti en un groupe amide de formule -CONR₁R₂, où R₁ et R₂ représentent H, des radicaux alkyle, cycloalkyle, alkylaryle ou aryle, facultativement substitués, ou bien N appartient à un noyau hétérocyclique, 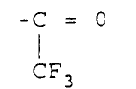 et son dérivé hydraté de formule : 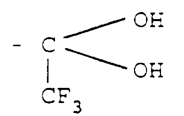 où X représente F ou Cl, et où le rapport du nombre de groupes cétone de formule 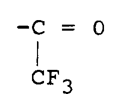 et/ou de leurs hydrates au nombre total de groupes carboxy -COOH et de leurs dérivés salifiés et amides dans le mélange de macromolécules se situe dans la plage de 0,5 à 5, et les milliéquivalents de groupes terminaux -COOH et de leurs dérivés salifiés ou amides par gramme de produit se situent dans la plage de 0,005 à 0,25.

3. Perfluoropolyéthers selon la revendication 2, dans lesquels ladite base N-hétérocyclique contient également d'autres hétéroatomes en dehors de N.

4. Perfluoropolyéthers selon la revendication 3, dans lesquels lesdits autres hétéroatomes sont choisis parmi O, S et P.

5. Perfluoropolyéthers selon la revendication 2, dans lesquels lesdits radicaux alkyle, cycloalkyle, alkylaryle ou aryle, facultativement substitués, contiennent des substituants choisis parmi -OH et halogènes.

6. Perfluoropolyéthers selon la revendication 2, dans lesquels ledit noyau hétérocyclique, auquel N dans la formule -CONR₁R₂ peut appartenir, contient également d'autres hétéroatomes.

7. Perfluoropolyéthers selon la revendication 6, dans lesquels lesdits autres hétéroatomes sont choisis parmi O, S et P.

8. Huiles lubrifiantes comprenant des perfluoropolyéthers ayant des groupes terminaux perfluoroalkyle et des perfluoropolyéthers tels que définis à l'une quelconque des revendications 1 à 7.
